# EUROPÄISCHE PATENTSCHRIFT

(11) **EP 2 829 689 B1**
(45) Veröffentlichungstag und Bekanntmachung des Hinweises auf die Patenterteilung: **13.03.2019**
(21) Anmeldenummer: 13177520.7
(22) Anmeldetag: 23.07.2013
(51) Int. Cl.: F01D 25/14, F02C 7/24, F01D 11/12, F01D 11/18

(54) **Dämmeinrichtung für eine thermischen Gastrubine und hiermit ausgerüstete thermische Gasturbine**
Insulating structure for a thermal gas turbine and thermal gas turbine with this structure
Dispositif d'isolation pour une turbine à gaz thermique et turbine à gaz thermique equippée avec celui-ci

(43) Veröffentlichungstag der Anmeldung: 28.01.2015
(73) Patentinhaber: MTU Aero Engines AG, 80995 München (DE)
(72) Erfinder: Stanka, Rudolf, 84431 Rattenkirchen (DE); Heß, Thomas, 81541 München (DE); Maar, Karl, 85276 Pfaffenhofen an der Ilm (DE); Dusel, Karl-Heinz, Dr., 85716 Unterschleißheim (DE)

(56) Entgegenhaltungen:
- DE-A1- 2 842 410
- DE-A1- 3 446 649
- DE-C1- 4 331 060
- DE-T2- 69 408 423
- FR-A- 1 235 694
- US-A- 4 526 616

## Beschreibung

Die Erfindung betrifft eine Dämmeinrichtung der im Oberbegriff des Patentanspruchs 1 angegebenen Art zur Anordnung zwischen einer Gehäusewand eines Gehäuses einer thermischen Gasturbine und einem Mantelring. Die Erfindung betrifft eine thermische Gasturbine mit einer derartigen Dämmeinrichtung.

Dämmeinrichtungen, die zwischen einer Gehäusewand und einem Mantelring bzw. Mantelringsegment von thermischen Gasturbinen angeordnet werden, um während des Betriebs der zugeordneten Gasturbine einen Wärmeeintrag in die Gehäusewand zu reduzieren, befinden sich in Umgebungen mit hohen Temperaturgradienten. Diese Bauteile müssen daher so gestaltet werden, dass die durch den Temperaturgradienten erzeugte Deformation die Dämmfunktionalität nicht oder zumindest im Wesentlichen nicht beeinträchtigt.

Aus der DE 43 31 060 C1 ist eine Dämmeinrichtung bekannt, welche zwei durch Umfalzen ihrer Randbereiche miteinander verbundene Metallfolien umfasst, die ein Wärmedämmmaterial umschließen. Bei dem Wärmedämmmaterial handelt es sich beispielsweise um eine kompakte Verbundstoffmischung von nicht expandiertem Tonerdesilikat-Keramikfaser-Vermiculit und einem organischen Binder. Steigende Temperaturen bewirken eine Expansion des Wärmedämmmaterials, so dass die Dämmeinrichtung gegen die den Hohlraum begrenzenden Wände gedrückt wird und diesen zusätzlich abdichtet. Durch das Umfalzen der Metallfolien können diese sich bei der Volumenerhöhung des Wärmedämmmaterials gegeneinander verschieben.

Als nachteilig an der bekannten Dämmeinrichtung ist der Umstand anzusehen, dass die relativ dünn auszuführenden Metallfolien insbesondere im Übergangsbereich zu ihren Falzstellen sowie an ihrer dem Heißgas der Gasturbine zugewandten radialen Unterseite rissanfällig sind. Durch entstehende Risse geht das Wärmedämmmaterial mit der Zeit verloren, wodurch sowohl die Dämm- als auch die Dichtwirkung beeinträchtigt wird.

Eine weitere Dämmeinrichtung, die zur Anordnung in einer Gasturbine vorgesehen ist, ist aus der DE 694 08 423 T2 bekannt und offenbart die Merkmale des Oberbegriffs von Anspruch 1.

Aufgabe der vorliegenden Erfindung ist es, eine Dämmeinrichtung der eingangs genannten Art zu schaffen, welche auch unter hohen Temperaturgradienten eine zuverlässige Dämmwirkung aufweist. Weitere Aufgaben der Erfindung ist die Schaffung einer thermischen Gasturbine mit einer derartigen Dämmeinrichtung.

Die Aufgaben werden erfindungsgemäß durch eine Dämmeinrichtung mit den Merkmalen des Patentanspruchs 1 sowie durch eine thermische Gasturbine mit den Merkmalen des Patentanspruchs 8 gelöst. Vorteilhafte Ausgestaltungen mit zweckmäßigen Weiterbildungen der Erfindung sind in den jeweiligen Unteransprüchen.

Ein erster Aspekt der Erfindung betrifft eine Dämmeinrichtung zur Anordnung zwischen einer Gehäusewand eines Gehäuses einer thermischen Gasturbine und einem Mantelring, welcher einen bezüglich einer Drehachse eines Rotors der thermischen Gasturbine radial innenliegenden Bereich aufweist, der rotierenden Laufschaufeln der Gasturbine zugewandt ist. Eine auch unter hohen Temperaturgradienten zuverlässige Dämmwirkung wird erfindungsgemäß dadurch erreicht, dass die Dämmeinrichtung zumindest bereichsweise eine poröse Dämmstruktur umfasst. Eine solche poröse Dämmstruktur bietet dabei den Vorteil einer verringerten Rissanfälligkeit und eine damit einhergehende erhöhte Lebensdauer. Darüber hinaus verbessert in den Poren der Dämmstruktur vorhandenes Gas im Vergleich zu den aus dem Stand der Technik bekannten kompakten Dämmmaterialien und Dämmschichten die Dämmwirkung der Dämmeinrichtung, wodurch bei einer vorgegebenen Dämmwirkung entsprechende Bauraumeinsparungen ermöglicht sind. Weiterhin besitzt die erfindungsgemäße Dämmeinrichtung aufgrund der porösen Dämmstruktur ein verringertes Gewicht. In einfachster Ausgestaltung der Erfindung besteht die Dämmeinrichtung ausschließlich aus der Dämmstruktur und weist keine weiteren Bauelemente auf. In diesem Fall kann die Dämmeinrichtung bzw. die poröse Dämmstruktur aufgrund ihrer Hohlräume aufweisenden Oberflächenstruktur zusätzlich als eine Art Labyrinthdichtung fungieren. Darüber hinaus ist es möglich, die erfindungsgemäße Dämmeinrichtung zumindest teilweise generativ herzustellen, wodurch neben entsprechenden Kosteneinsparungen auch komplexe Außen- und Porengeometrien einfach darstellbar sind. Grundsätzlich kann die Dämmstruktur überwiegend oder vollständig offenporig oder überwiegend oder vollständig geschlossenporig ausgebildet sein.

Es ist vorgesehen, dass zumindest die poröse Dämmstruktur bezüglich der Drehachse des Rotors radial elastisch und axial gasundurchlässig und in Umfangsrichtung gasdurchlässig ausgebildet ist. Mit anderen Worten ist es vorgesehen, dass die poröse Dämmstruktur zumindest im montierten Zustand eine radiale Elastizität aufweist. Hierdurch kann die Dämmstruktur in einem vorgespannten Zustand in den zugeordneten Hohlraum bzw. in die zugeordnete Kavität des Gehäuses eingebaut werden, wodurch eine besonders hohe Dämm- und Dichtwirkung auch unter hohen Temperaturgradienten erzielbar sind. Darüber hinaus können durch die radiale Elastizität etwaige thermisch und/oder mechanisch induzierte Spannungen besser abgebaut werden, wodurch die Lebensdauer der Dämmeinrichtung zusätzlich erhöht wird. Indem die Dämmstruktur axial gasundurchlässig ist, wird im eingebauten Zustand der Dämmeinrichtung eine besonders hohe Dämm- und Dichtwirkung erzielt. Da die Dämmstruktur in Umfangsrichtung gasdurchlässig ausgebildet ist, ist mit anderen Worten mindestens ein Gaskanal ausgebildet ist, der sich bezüglich des eingebauten Zustands der Dämmeinrichtung in Umfangsrichtung zwischen einem gaszuführseitigen Ende und einem gasauslassseitigen Ende der Dämmstruktur erstreckt, ist es möglich, die Dämmstruktur in Umfangsrichtung mit einem Kühlmedium zu beaufschlagen, wodurch dessen Dämm- und Isolationswirkung zusätzlich gesteigert wird.

Weitere Vorteile ergeben sich, indem die poröse Dämmstruktur geometrisch regelmäßige und/oder geometrisch unregelmäßige und/oder gerichtet poröse und/oder im Querschnitt mäanderförmige und/oder im Querschnitt mehreckige Hohlräume aufweist. Durch eine geometrisch regelmäßige und/oder unregelmäßige Ausgestaltung der Hohlräume können einerseits die Geometrie des auszufüllenden Hohlraums und andererseits die während des Betriebs der zugeordneten Gasturbine auftretenden thermischen und mechanischen Spannungen besonders gut berücksichtigt werden. Eine gerichtet Porosität erlaubt die gezielte Ausbildung von Gaskanälen durch die Dämmstruktur. Indem die Hohlräume im Querschnitt mäanderförmig und/oder mehreckig ausgebildet sind, können gezielt isotropische und/oder anisotropische Eigenschaften und/oder Gasdurchlässigkeiten erzeugt werden. Darüber hinaus kann das Verhältnis von Wandmaterial der Dämmstruktur zu Hohlraumvolumen der Dämmstruktur optimal an den jeweiligen Anwendungszweck angepasst werden. Unter einer mehreckigen Geometrie sind insbesondere regelmäßige und/oder unregelmäßige Dreiecke, Vierecke (z. B. würfelförmig, quaderförmig, rautenförmig etc.), Fünfecke, Sechsecke, Siebenecke, Achtecke usw. zu verstehen.

Weitere Vorteile ergeben sich, wenn die poröse Dämmstruktur an einem radial außenliegenden Bereich des Mantelrings angeordnet und/oder auf dem radial außenliegenden Bereich des Mantelrings ausgebildet ist. Mit anderen Worten kann vorgesehen sein, dass die Dämmstruktur an einem radial außenliegenden Bereich des Mantelrings oder Mantelringsegments, der auch als "Outer Air Seal" (OAS) bezeichnet wird, angeordnet wird, so dass der radial außenliegende Bereich des Mantelrings die Dämmstruktur und damit die Dämmeinrichtung begrenzt. Es kann dabei vorgesehen sein, dass die Dämmstruktur und der Mantelring - beispielsweise stoffschlüssig - miteinander verbunden werden. Ebenso ist es möglich, dass die Dämmstruktur unmittelbar auf dem radial außenliegenden Bereich des Mantelrings ausgebildet bzw. hergestellt wird. Hierdurch ist eine einstückige Bauweise des Mantelrings und der Dämmeinrichtung ermöglicht, wodurch entsprechende Zeit- und Kosteneinsparungen bei der Montage gegeben sind, da lediglich ein Bauteil montiert werden muss.

In einer weiteren vorteilhaften Ausgestaltung der Erfindung ist die poröse Dämmstruktur zumindest bereichsweise oder vollständig von wenigstens einer Dichtungswand umgeben. Mit Hilfe einer Dichtungswand, die grundsätzlich ganz oder teilweise starr und/oder elastisch ausgebildet sein kann, kann ein Schutz der porösen Dämmstruktur vor Umwelteinflüssen, mechanischer Beschädigung, unerwünschtem Gasaustausch und dergleichen erzielt werden. Darüber hinaus kann die wenigstens eine Dichtungswand Montagebereiche zur Anbindung der Dämmeinrichtung an das Gehäuse bereitstellen. Es kann vorgesehen sein, dass mehrere Bereiche der Dämmstruktur mit einer entsprechenden Anzahl an voneinander unabhängigen Dichtungswänden versehen werden.

Weitere Vorteile ergeben sich, indem die Dichtungswand wenigstens eine Durchtrittsöffnung aufweist, durch welche zumindest während des Betriebs der thermischen Gasturbine Gas in die poröse Dämmstruktur eintreten und/oder aus der porösen Dämmstruktur austreten kann. Hierdurch können gezielt Leckagepfade durch die Dämmeinrichtung definiert werden, beispielsweise zur Erzielung einer Restriktorwirkung bzw. zum gezielten Abführen von Wärme. Die Integration dieser Funktionalität in die Dämmeinrichtung erlaubt es, entsprechende Bauteile bei der zugeordneten Gasturbine einzusparen, wodurch sich neben dem Gewicht und dem Bauraumbedarf auch die Zahl der abzudichtenden Stellen im Gehäuse vorteilhaft reduziert. Alternativ oder zusätzlich kann die wenigstens eine Durchtrittsöffnung auch zur Druckbeaufschlagung des durch die Dichtungswand bzw. Dichtungswände begrenzten Innenraums der Dämmeinrichtung verwendet werden, so dass die Dämmeinrichtung beim Vorherrschen gewisser Druckunterschiede "aufgeblasen" werden kann.

In einer weiteren nicht beanspruchten Ausführungsform ist vorgesehen, dass wenigstens eine Durchtrittsöffnung in einem bezüglich der Drehachse des Rotors axial vorderen und/oder axial hinteren Bereich der Dämmeinrichtung in einer entsprechenden Dichtungswand ausgebildet ist. Hierdurch können die während des Betriebs der zugeordneten Gasturbine auftretenden Druckdifferenzen zwischen dem in Strömungsrichtung betrachtet stromauf liegenden Endbereich und/oder dem stromab liegenden Endbereich der Dämmeinrichtung optimal ausgenutzt werden.

In einer weiteren vorteilhaften Ausgestaltung der Erfindung ist vorgesehen, dass die Dämmeinrichtung auf ihrer der Gehäusewand der Gasturbine zuzuwendenden Seite wenigstens ein Abstandselement zur Ausbildung eines Strömungspfads zwischen dem Dichtungselement und der Gehäusewand umfasst. Auch hierdurch kann vorteilhaft ein Leckagepfad zur Reduzierung und/oder gezielten Führung von Leckagegasen definierter werden. Das wenigstens eine Abstandselement kann in einfachster Ausgestaltung durch die poröse Dämmstruktur gebildet werden. Alternativ oder zusätzlich kann das Abstandselement als Erhebung, beispielsweise als Noppe, auf einer Dichtungswand angeordnet bzw. integral mit dieser ausgebildet sein.

Indem die Dämmeinrichtung ringsegmentförmig und/oder einstückig mit dem Mantelring ausgebildet ist, können entsprechende Zeit- und Kostenvorteile bei der Montage, Demontage und Überholung der zugeordneten Gasturbine erzielt werden.

Weitere Vorteile ergeben sich, wenn die Dämmeinrichtung wenigstens einen Anschlag zur Positionierung der Dämmeinrichtung im Hohlraum und/oder wenigstens eine Aufnahme, in welcher wenigstens ein weiteres Bauteil der thermischen Gasturbine anordenbar ist, und/oder einen Flansch zur Anlage an wenigstens einem weiteren Bauteil der thermischen Gasturbine umfasst. Dies stellt weitere Möglichkeiten zur Vereinfachung und Beschleunigung der Montage und Demontage der Dämmeinrichtung dar, wodurch entsprechende Zeit- und Kostenvorteile realisiert werden.

Die Dämmeinrichtung wird zumindest bereichsweise mit einer porösen Dämmstruktur hergestellt. Hierdurch ist es möglich, eine Dämmeinrichtung herzustellen, die auch unter hohen Temperaturgradienten eine zuverlässige Dämmwirkung aufweist.

Eine besonders flexible und kostengünstige Herstellung kann dadurch erzielt werden, dass die Dämmeinrichtung zumindest bereichsweise generativ hergestellt wird. Beispielsweise kann die Dämmeinrichtung ganz oder teilweise durch Stereolithografie, selektives Laserschmelzen, selektives Lasersintern, Fused Deposition Modeling, Laminated Object Modelling oder 3D Printing sowie aus Kombinationen hieraus hergestellt werden. Insbesondere wenn die Dämmeinrichtung bzw. ihre Dämmstruktur eine hohe geometrische Komplexität aufweist, werden auf diese Weise erhebliche Zeit- und Kosteneinsparungen erzielt.

Dabei kann es weiterhin vorgesehen sein, dass die Dämmeinrichtung aus unterschiedlichen Werkstoffen hergestellt wird. Beispielsweise können die Dämmstruktur und die Dichtungswand bzw. -wände aus unterschiedlichen Materialien bestehen. Alternativ oder zusätzlich kann vorgesehen sein, dass die Dämmstruktur aus unterschiedlichen Materialien gefertigt wird, um ein anisotropes Verhalten zu erzielen. Es versteht sich, dass die verwendeten Materialien die während des Betriebs der zugeordneten Gasturbine auftretenden Maximaltemperaturen verkraften können müssen. In Abhängigkeit des Herstellungsverfahrens empfehlen sich daher insbesondere hochtemperaturfeste Legierungen und keramische Materialien.

Ein weiterer Aspekt der Erfindung betrifft eine thermische Gasturbine, insbesondere ein Flugzeugtriebwerk, welche ein Gehäuse aufweist, in welchem eine gemäß dem ersten Erfindungsaspekt ausgebildete Dämmeinrichtung zwischen einer Gehäusewand und einem Mantelring angeordnet ist, wobei der Mantelring einen bezüglich einer Drehachse eines Rotors der Gasturbine radial innenliegenden Bereich aufweist, der rotierenden Laufschaufeln der Gasturbine zugewandt ist, und einen radial außenliegenden Bereich aufweist, der der Dämmeinrichtung zugewandt ist. Hierdurch ist es möglich, die Gasturbine mit einer Dämmeinrichtung zu versehen, die auch unter hohen Temperaturgradienten eine zuverlässige Dämmwirkung aufweist.

Weitere Vorteile ergeben sich, wenn zumindest die poröse Dämmstruktur der zwischen der Gehäusewand und dem Mantelring angeordneten Dämmeinrichtung vorgespannt ist. Hierdurch ist vorteilhaft sichergestellt, dass die Dämmwirkung auch bei hohen Temperaturgradienten zuverlässig aufrechterhalten wird, da die Dämmstruktur aufgrund ihrer Vorspannung einen automatischen Toleranzausgleich vornehmen kann. Grundsätzlich kann in Abhängigkeit der konkreten Ausgestaltung der Dämmeinrichtung auch vorgesehen sein, dass die gesamte Dämmeinrichtung vorgespannt ist.

Weitere Merkmale der Erfindung ergeben sich aus den Ansprüchen, den(m) Ausführungsbeispiel(en) sowie anhand der Zeichnung(en). Die vorstehend in der Beschreibung genannten Merkmale und Merkmalskombinationen sowie die nachfolgend in den(m) Ausführungsbeispiel(en) genannten Merkmale und Merkmalskombinationen sind nicht nur in der jeweils angegebenen Kombination, sondern auch in anderen Kombinationen verwendbar, ohne den Rahmen der Erfindung, wie er in den Ansprüchen definiert ist, zu verlassen. Dabei zeigt:
- Fig. 1: eine schematische seitliche Schnittansicht eines Mantelrings, auf welchem eine erfindungsgemäße Dämmeinrichtung ausgebildet ist;
- Fig. 2: eine Perspektivansicht einer segmentförmig ausgebildeten Dämmeinrichtung gemäß einem weiteren Ausführungsbeispiel;
- Fig. 3: eine geschnittene Perspektivansicht der in Fig. 2 gezeigten Dämmeinrichtung;
- Fig. 4: eine schematische Ansicht der in Fig. 3 gezeigten Schnittfläche III der Dämmeinrichtung;
- Fig. 5: eine Vergrößerung des in Fig. 4 gezeigten Details V;
- Fig. 6: eine Vergrößerung des in Fig. 4 gezeigten Details V, wobei die Dämmstruktur elastisch vorgespannt ist; und
- Fig. 7: eine schematische seitliche Schnittansicht eines weiteren, nicht beanspruchten Ausführungsbeispiels der Dämmeinrichtung.

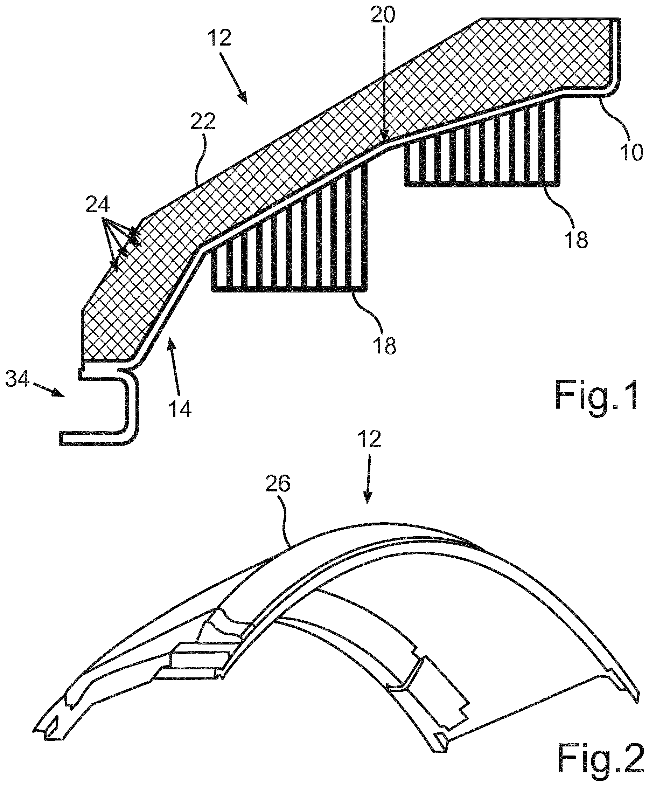

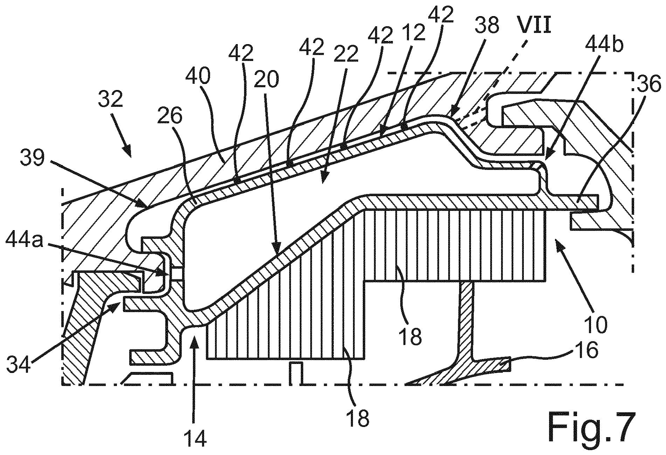

Fig. 1 zeigt eine schematische seitliche Schnittansicht eines Mantelrings 10 eines Flugzeugtriebwerks (nicht gezeigt), auf welchem eine erfindungsgemäße Dämmeinrichtung 12 ausgebildet ist. Der Mantelring 10, der vorliegend segmentiert ausgebildet ist, umfasst einen bezüglich einer Drehachse eines Rotors des Flugzeugtriebwerks radial innenliegenden Bereich 14, der rotierenden Laufschaufeln 16 (s. Fig. 7) des Flugzeugtriebwerks zugewandt ist. Am radial innenliegenden Bereich 14 sind an sich bekannte Dichtelemente 18, beispielsweise Honigwabenstrukturen, in die sich die Laufschaufeln 16 einarbeiten können, angeordnet. Weiterhin umfasst der Mantelring 10 einen radial außenliegenden Bereich 20, auf welchem im gezeigten Ausführungsbeispiel die erfindungsgemäße Dämmeinrichtung 12 generativ aus einer hochtemperaturfesten Metalllegierung hergestellt wurde, so dass der Mantelring 10 und die Dämmeinrichtung 12 einstückig vorliegen. Die Dämmeinrichtung 12 besteht im gezeigten Ausführungsbeispiel aus einer porösen Dämmstruktur 22 mit einer Vielzahl von Hohlräumen 24, wobei die Hohlräume 24 im Querschnitt jeweils rautenförmig ausgebildet sind. Die Hohlräume 24 weisen dabei zumindest im Wesentlichen dieselbe Querschnittsfläche auf. Alternativ kann vorgesehen sein, dass manche Hohlräume 24 eine abweichende, gegebenenfalls auch unregelmäßige Geometrie und/oder eine abweichende Querschnittsfläche aufweisen können. Die Dämmstruktur 22 ist dabei so ausgebildet, dass sie bezüglich der Drehachse des Rotors radial elastisch, axial gasundurchlässig und in Umfangsrichtung gasdurchlässig ist. Dies wir im Zusammenhang mit dem folgenden Ausführungsbeispiel näher erläutert werden. Der Mantelring 10 stellt weiterhin eine Aufnahme 34 zur Verfügung, in welcher weitere Bauteile einer thermischen Gasturbine bei der Montage des Mantelrings 10 in einem Gehäuse 32 der Gasturbine anordenbar sind.

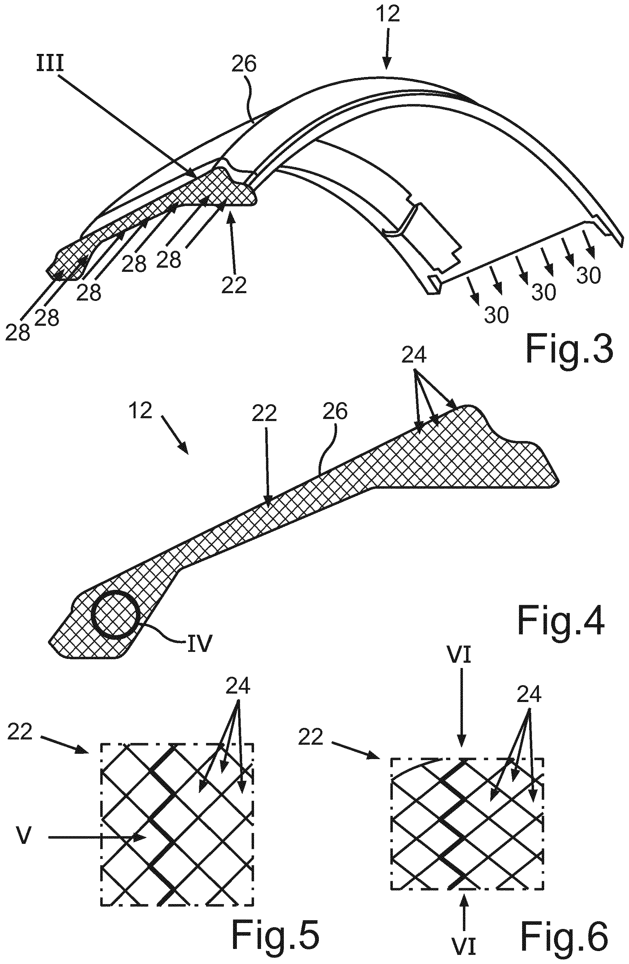

Fig. 2 zeigt eine Perspektivansicht einer segmentförmig ausgebildeten Dämmeinrichtung 12 gemäß einem weiteren Ausführungsbeispiel und wird in Zusammenschau mit Fig. 3 bis Fig. 6 diskutiert. Fig. 3 zeigt hierzu eine geschnittene Perspektivansicht der in Fig. 2 gezeigten Dämmeinrichtung 12, während Fig. 4 eine schematische Ansicht der in Fig. 3 gezeigten Schnittfläche III der Dämmeinrichtung 12 zeigt. In Fig. 5 und Fig. 6 sind jeweils Detailvergrößerungen des in Fig. 4 gezeigten Details IV abgebildet, wobei die Dämmstruktur 22 der Dämmeinrichtung 12 in Fig. 5 in einem radial entspannten Zustand und in Fig. 6 in einem radial elastisch vorgespannten Zustand abgebildet ist. Man erkennt in Fig. 2, dass die Dämmeinrichtung 12 im Unterschied zum ersten Ausführungsbeispiel nicht einstückig mit einem Mantelring 10 ausgebildet ist und darüber hinaus eine Dichtungswand 26 aufweist, welche die Dämmstruktur 22 vollständig ummantelt. Die Dichtungswand 26 kann grundsätzlich aus demselben oder aus einem abweichenden Material wie die Dämmstruktur 22 bestehen. Darüber hinaus kann vorgesehen sein, dass die Dichtungswand 26 nicht generativ, sondern beispielsweise durch Urformen, Umformen, Trennen und dergleichen hergestellt wird, während die Dämmstruktur 22 generativ hergestellt wird. Alternativ kann die gesamte Dämmeinrichtung 12 generativ oder nicht-generativ hergestellt werden.

Wie man in Fig. 3 erkennt, kann mit Pfeilen 28 symbolisierte Kühlluft in Umfangsrichtung der kreissegmentfömigen Dämmeinrichtung 12 in die Dämmstruktur 22 eindringen und wird am gegenüberliegenden Endbereich der Dämmstruktur 22 wieder ausgeleitet bzw. im montierten Zustand in eine anschließende Dämmeinrichtung 12 eingeleitet. Dies ist mit den Pfeilen 30 symbolisiert. Wie man in Fig. 4 und Fig. 5 erkennt, sorgt die Geometrie der porösen Dämmstruktur 22 dafür, dass die Dämmstruktur 22 und damit die Dämmeinrichtung 12 axial gasundurchlässig sind. Dies ist in Fig. 5 mit dem Pfeil V angedeutet. Wie man in Fig. 6 erkennt, ist sorgt die Geometrie der porösen Dämmstruktur 22 allerdings auch dafür, dass die Dämmstruktur 22 gemäß den Pfeilen VI in radialer Richtung elastisch verformbar ist. Hierdurch ist es möglich, die Dämmstruktur 22 bzw. die Dämmeinrichtung 12 vorzuspannen und im vorgespannten Zustand in einem zugeordneten Gehäuse 32 (s. Fig. 7) zu montieren, wodurch eine besonders hohe Dämmwirkung erzielt wird. Hierzu ist es von Vorteil, wenn auch die Dichtungswand 26 - sofern vorhanden - zumindest teilelastisch bzw. verformbar ausgebildet wird.

Fig. 7 zeigt eine schematische seitliche Schnittansicht eines weiteren, nicht beanspruchten Ausführungsbeispiels der Dämmeinrichtung 12, wobei die Dämmeinrichtung 12 im montierten Zustand in einem Gehäuse 32 eines Flugzeugtriebwerks dargestellt ist. Ähnlich wie im ersten Ausführungsbeispiel ist die Dämmeinrichtung 12 dabei einstückig mit einem segmentförmigen Mantelring 10 ausgebildet. Der radial außenliegende Bereich 20 des Mantelrings 10 bildet dabei den radial inneren Dichtungswandbereich der Dämmeinrichtung 12. Die von der Dichtungswand 26 umschlossene Dämmstruktur 22 ist aus Gründen der Übersichtlichkeit nicht detailliert dargestellt. Grundsätzlich kann die Dämmstruktur 22 aber auch im vorliegenden Fall beispielsweise geometrisch regelmäßige, geometrisch unregelmäßige, offenporöse, geschlossenporöse, gerichtet poröse, im Querschnitt mäanderförmige und/oder im Querschnitt mehreckige Hohlräume 24 aufweisen. Man erkennt, dass die Dichtungswand 26 eine Aufnahme 34 bildet, in welcher weitere, an sich bekannte Bauteile der Gasturbine angeordnet sind. Weiterhin bildet die Dichtungswand 26 einen Flansch 36 zur Anlage an wenigstens einem weiteren Bauteil der thermischen Gasturbine. Der in Fig. 7 mit dem Bezugszeichen 38 versehene Bereich dient darüber hinaus als integraler Anschlag zur Positionierung der Dämmeinrichtung 12 in der zugeordneten Kavität 39 des Gehäuses 32.

Die Dämmeinrichtung 12 weist auf ihrer einer Gehäusewand 40 zugewandten Seite mehrere noppenförmige Abstandselemente 42 zur Ausbildung eines definierten Strömungspfads zwischen der Dämmeinrichtung 12 und der Gehäusewand 40 auf. Hierdurch kann gewährleistet werden, dass immer eine Mindestgasmenge zwischen der Dämmeinrichtung 12 und der Gehäusewand 40 durchströmen kann. Um eine Druckbeaufschlagung der porösen Dämmstruktur 22 zu ermöglichen, sind, in Strömungsrichtung betrachtet, an der Eintrittsseite der Dichtungswand 26 Durchtrittsöffnungen 44a vorgesehen, die beispielsweise als Bohrungen ausgeführt sein können. In dem in Strömungsrichtung betrachtet stromab liegenden Endbereich der Dämmeinrichtung 12 können bei Bedarf zur Gas- und Wärmeabfuhr eine oder mehrere weitere Durchtrittsöffnungen 44b vorgesehen sein, die beispielsweise als Restriktorbohrung(en) ausgeführt sein können und Gas in den gewünschten Gehäusebereich abführen. Mit dem Bezugszeichen VII ist eine grundsätzlich mögliche Anordnung eines Gasabführkanals in der Gehäusewand 40 angedeutet. Wenn dieser Gasabführungskanal vorhanden ist, kann vorgesehen sein, dass alternativ oder zusätzlich zu den radial weiter innenliegenden Durchtrittsöffnungen 44b eine oder mehrere Durchtrittsöffnungen (nicht gezeigt) im Bereich dieses Gasabführungskanals in der Dichtungswand 26 ausgebildet sind. Der angedeutete Gasabführungskanal kann weiterhin zum Abführen von Gas verwendet werden, welches vermittels der Abstandselemente 42 zwischen der Gehäusewand 40 und dem radial oberen Dichtungswandbereich hindurchströmt.

## Patentansprüche

1. Dämmeinrichtung (12) zur Anordnung zwischen einer Gehäusewand (40) eines Gehäuses (32) einer thermischen Gasturbine und einem Mantelring (10), welcher einen bezüglich einer Drehachse eines Rotors der thermischen Gasturbine radial innenliegenden Bereich (14) aufweist, der rotierenden Laufschaufeln (16) der Gasturbine zugewandt ist, wobei die Dämmeinrichtung (12) zumindest bereichsweise eine poröse Dämmstruktur (22) umfasst,
und wobei die poröse Dämmstruktur (22) im montierten Zustand bezüglich der Drehachse des Rotors radial elastisch und in Umfangsrichtung gasdurchlässig ausgebildet ist,
**dadurch gekennzeichnet, dass** die Dämmstruktur (22) axial gasundurchlässig ist.

2. Dämmeinrichtung (12) nach Anspruch 1, **dadurch gekennzeichnet, dass** die poröse Dämmstruktur (22) geometrisch regelmäßige und/oder geometrisch unregelmäßige und/oder gerichtet poröse und/oder im Querschnitt mäanderförmige und/oder im Querschnitt mehreckige Hohlräume (24) aufweist.

3. Dämmeinrichtung (12) nach Anspruch 1 oder 2, **dadurch gekennzeichnet, dass** die poröse Dämmstruktur (22) an einem radial außenliegenden Bereich (20) des Mantelrings (10) angeordnet und/oder auf dem radial außenliegenden Bereich (20) des Mantelrings (10) ausgebildet ist.

4. Dämmeinrichtung (12) nach einem der Ansprüche 1 bis 3, sofern rückbezogen auf Anspruch 1, **dadurch gekennzeichnet, dass** die poröse Dämmstruktur (22) zumindest bereichsweise oder vollständig von wenigstens einer Dichtungswand (26) umgeben ist.

5. Dämmeinrichtung (12) nach einem der Ansprüche 1 bis 4, **dadurch gekennzeichnet, dass** diese auf ihrer der Gehäusewand (40) der Gasturbine zuzuwendenden Seite wenigstens ein Abstandselement (42) zur Ausbildung eines Strömungspfads zwischen dem Dichtungselement (12) und der Gehäusewand (40) umfasst.

6. Dämmeinrichtung (12) nach einem der Ansprüche 1 bis 5, **dadurch gekennzeichnet, dass** diese ringsegmentförmig und/oder einstückig mit dem Mantelring (10) ausgebildet ist.

7. Dämmeinrichtung (12) nach einem der Ansprüche 1 bis 6, **dadurch gekennzeichnet, dass** diese wenigstens einen Anschlag (38) zur Positionierung der Dämmeinrichtung (12) im Hohlraum und/oder wenigstens eine Aufnahme (34), in welcher wenigstens ein weiteres Bauteil der thermischen Gasturbine anordenbar ist, und/oder einen Flansch (36) zur Anlage an wenigstens einem weiteren Bauteil der thermischen Gasturbine umfasst.

8. Thermische Gasturbine, insbesondere Flugzeugtriebwerk, mit einem Gehäuse (32), in welchem eine Dämmeinrichtung (12) zwischen einer Gehäusewand (40) und einem Mantelring (10) angeordnet ist, wobei der Mantelring (10) einen bezüglich einer Drehachse eines Rotors der Gasturbine radial innenliegenden Bereich (14), der rotierenden Laufschaufeln (16) der Gasturbine zugewandt ist, und einen radial außenliegenden Bereich (20), der der Dämmeinrichtung (12) zugewandt ist, aufweist, **dadurch gekennzeichnet, dass** die Dämmeinrichtung (12) gemäß einem der Ansprüche 1 bis 7 ausgebildet ist.

9. Gasturbine nach Anspruch 8, **dadurch gekennzeichnet, dass** zumindest die poröse Dämmstruktur (22) der zwischen der Gehäusewand (40) und dem Mantelring (10) angeordneten Dämmeinrichtung (12) vorgespannt ist.

## Claims

1. Damping device (12) for arrangement between a housing wall (40) of a housing (32) of a thermal gas turbine and a shroud ring (10) having a radially inner region (14) with respect to a rotational axis of a rotor of the thermal gas turbine, which region faces rotating rotor blades (16) of the gas turbine, the damping device (12) having a porous damping structure (22) at least in regions, and, when mounted, the porous damping structure (22) being radially resilient and permeable to gas in the peripheral direction with respect to the rotational axis of the rotor, **characterized in that** the damping structure (22) is axially impermeable to gas.

2. Damping device (12) according to claim 1, **characterized in that** the porous damping structure (22) comprises cavities (24) which are geometrically regular and/or are geometrically irregular and/or have directed porosity and/or are meander-shaped in cross section and/or are polygonal in cross section.

3. Damping device (12) according to either claim 1 or claim 2, **characterized in that** the porous damping structure (22) is arranged on a radially outer region (20) of the shroud ring (10) and/or is formed on the radially outer region (20) of the shroud ring (10).

4. Damping device (12) according to any of claims 1 to 3, when dependent on claim 1, **characterized in that** the porous damping structure (22) is surrounded by at least one sealing wall (26) at least in regions or completely.

5. Damping device (12) according to any of claims 1 to 4, **characterized in that** it comprises, on the side thereof that faces the housing wall (40) of the gas turbine, at least one spacer element (42) for forming a flow path between the sealing element (12) and the housing wall (40).

6. Damping device (12) according to any of claims 1 to 5, **characterized in that** it is in the form of a ring segment and/or is integral with the shroud ring (10).

7. Damping device (12) according to any of claims 1 to 6, **characterized in that** it comprises at least one stop (38) for positioning the damping device (12) in the cavity and/or at least one receiving portion (34) in which at least one further component of the thermal gas turbine can be arranged, and/or a flange (36) for abutting at least one further component of the thermal gas turbine.

8. Thermal gas turbine, in particular an aircraft engine, comprising a housing (32) in which a damping device (12) is arranged between a housing wall (40) and a shroud ring (10), the shroud ring (10) comprising a radially inner region (14) with respect to a rotational axis of a rotor of the gas turbine, which region faces rotating rotor blades (16) of the gas turbine, and a radially outer region (20) which faces the damping device (12), **characterized in that** the damping device (12) is designed according to any of claims 1 to 7.

9. Gas turbine according to claim 8, **characterized in that** at least the porous damping structure (22) of the damping device (12) arranged between the housing wall (40) and the shroud ring (10) is pretensioned.

## Revendications

1. Dispositif d'isolation (12) destiné à être disposé entre une paroi de carter (40) d'un carter (32) d'une turbine à gaz thermique et une virole (10), laquelle présente une zone radialement intérieure (14) par rapport à un axe de rotation d'un rotor de la turbine à gaz thermique (14), est orientée vers l'aube mobile en rotation (16) de la turbine à gaz, le dispositif d'isolation (12) comprenant au moins partiellement une structure d'isolation poreuse (22), et la structure d'isolation poreuse (22) étant constituée, à l'état monté, de manière radialement élastique par rapport à l'axe de rotation du rotor et perméable au gaz dans la direction circonférentielle, **caractérisé en ce que** la structure d'isolation (22) est axialement imperméable aux gaz.

2. Dispositif d'isolation (12) selon la revendication 1, **caractérisé en ce que** la structure d'isolation poreuse (22) présente des cavités polygonales (24) géométriquement régulières et/ou géométriquement irrégulières et/ou directionnellement poreuses et/ou en forme de méandres en section transversale et/ou polygonales en section transversale.

3. Dispositif d'isolation (12) selon la revendication 1 ou 2, **caractérisé en ce que** la structure d'isolation poreuse (22) est disposée sur une zone radialement extérieure (20) de la virole (10) et/ou est agencée sur la zone radialement extérieure (20) de la virole (10).

4. Dispositif d'isolation (12) selon l'une des revendications 1 à 3 lorsqu'elles dépendent de la revendication 1, **caractérisé en ce que** la structure d'isolation poreuse (22) est au moins partiellement ou complètement entourée par au moins une paroi d'étanchéité (26).

5. Dispositif d'isolation (12) selon l'une des revendications 1 à 4, **caractérisé en ce que** celui-ci comprend, sur son côté devant s'orienter vers la paroi de carter (40) de la turbine à gaz, au moins un élément d'entretoise (42) destiné à constituer un chemin d'écoulement entre l'élément d'étanchéité (12) et la paroi de carter (40).

6. Dispositif d'isolation (12) selon l'une des revendications 1 à 5, **caractérisé en ce qu'**il est constitué sous la forme d'un segment de bague et/ou d'une seule pièce avec la virole (10).

7. Dispositif d'isolation (12) selon l'une des revendications 1 à 6, **caractérisé en ce que** celui-ci comprend au moins une butée (38) pour le positionnement du dispositif d'isolation (12) dans la cavité et/ou au moins un réceptacle (34) dans lequel au moins un autre composant de la turbine à gaz thermique peut être disposée, et/ou une bride (36) de fixation sur au moins un autre composant de la turbine à gaz thermique.

8. Turbine à gaz thermique, notamment de moteur d'avion, avec un carter (32) dans lequel un dispositif d'isolation (12) est disposé entre une paroi de carter (40) et une virole (10), la virole (10) présentant une zone radialement intérieure (14) par rapport à un axe de rotation d'un rotor de la turbine à gaz qui est orienté vers les aubes mobiles (16) en rotation de la turbine à gaz, et une zone radialement extérieure (20) qui est orientée vers le dispositif d'isolation (12), **caractérisée en ce que** le dispositif d'isolation (12) est constitué selon l'une des revendications 1 à 7.

9. Turbine à gaz selon la revendication 8, **caractérisée en ce qu'**au moins la structure d'isolation poreuse (22) du dispositif d'isolation (12) disposé entre la paroi de carter (40) et la virole (10) est précontrainte.
